(19) **Europäisches Patentamt / European Patent Office / Office européen des brevets**

(11) **EP 4 733 999 A1**

(12) # EUROPEAN PATENT APPLICATION

(43) Date of publication:
**29.04.2026 Bulletin 2026/18**

(51) International Patent Classification (IPC):
**G06N 3/0495** (2023.01)   **G06N 3/048** (2023.01)
**H04N 19/426** (2014.01)

(21) Application number: **24306779.0**

(22) Date of filing: **22.10.2024**

(52) Cooperative Patent Classification (CPC):
**G06N 3/0495; G06N 3/048; H04N 19/426**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
- **DUMAS, Thierry 35700 Rennes (FR)**
- **URBAN, Fabrice 35235 Thorigne-Fouillard (FR)**
- **GALPIN, Franck 35235 Thorigne-Fouillard (FR)**
- **CHEN, Ya 35700 Rennes (FR)**

(74) Representative: **Vossius & Partner Patentanwälte Rechtsanwälte mbB Siebertstraße 3 81675 München (DE)**

(54) **REMOVING WASTEFUL COMPUTATIONS IN NEURAL NETWORKS WITH SPARSE WEIGHTS**

(57)    Video coding may be performed by removing wasteful computations in neural networks with sparse weights. For example, a device (e.g., a decoder for video decoding) may determine a neural network (NN). The NN may be associated with sparse weights. The NN may comprise an architecture and a set of parameters. The device may determine a set of sparse matrices of weights inside the NN that satisfies a criterion. The device may determine a modified set of matrices of weights, for example, by processing each sparse matrix of weights in the set of sparse matrices of weights, such that one or more non-zero rows and/or one or more non-zero columns from the corresponding sparse matrix may be transferred to the modified matrix of weights.

(1000) beginning of the pre-analysis applied to a NN $NN_{init}$ with sparse weights

(1001) defining a set $\mathcal{S}$ of sparse matrices of weights inside $NN_{init}$ to be considered by this pre-analysis via a criterion $\mathcal{C}$

$\mathcal{S}$

(1002) for each sparse matrix of weights $V$ in $\mathcal{S}$, running (1150) with $V$ as input, yielding the set $\dot{\mathcal{S}}$ of modified matrices of weights

$\dot{\mathcal{S}}$

(1003) defining the pre-analyzed NN $NN_{end}$ as $NN_{init}$ but, $\forall i \in card(\dot{\mathcal{S}})$, $\dot{\mathcal{S}}_i$ in $NN_{end}$ replacing its associated matrix of weights in $NN_{init}$

$NN_{end}$

(1004) end of the pre-analysis applied to $NN_{init}$ with sparse weights

**FIG. 10**

EP 4 733 999 A1

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for performing video coding (e.g., encoding and/or decoding) by removing wasteful computations in neural networks with sparse weights.

In examples, a device (e.g., a decoder for video decoding) may determine a first neural network (NN). The first NN may be associated with sparse weights. The NN may comprise an architecture and a set of parameters. The device may determine a set of sparse matrices of weights inside the first NN that satisfies a criterion. The device may determine a modified set of matrices of weights. For example, the device may determine the modified set of matrices by processing each sparse matrix of weights in the set of sparse matrices of weights, such that one or more non-zero rows and/or one or more non-zero columns from the corresponding sparse matrix of weights may be transferred to a modified matrix of weights. Further example methods of determining the modified set of matrices of weights are described herein. A second NN may be created by reusing the architecture of the first NN using each modified matrix of weights belonging to the determined modified set of matrices of weights instead of its associated matrix of weights in the first NN.

In examples, a device (e.g., an encoder for video encoding) may determine a first neural network (NN). The first NN may be associated with sparse weights. The NN may comprise an architecture and a set of parameters. The device may determine a set of sparse matrices of weights inside the first NN that satisfies a criterion. The device may determine a modified set of matrices of weights. For example, the device may determine the modified set of matrices by processing each sparse matrix of weights in the set of sparse matrices of weights, such that one or more non-zero rows and/or one or more non-zero columns from the corresponding sparse matrix of weights may be transferred to a modified matrix of weights. Further example methods of determining the modified set of matrices of weights are described herein. A second NN may be created by reusing the architecture of the first NN using each modified matrix of weights belonging to the determined modified set of matrices of weights instead of its associated matrix of weights in the first NN.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example of a prediction of the current $w \times h$ block $Y$ from the context $X$ of reference samples around $Y$ via the NN-based intra prediction mode.

FIG. 5 illustrates an example of intra prediction mode signaling for the current $w \times h$ luma CB.

FIG. 6 illustrates an example of matrix multiplication using a sparse matrix.

FIG. 7 illustrates an example of matrix multiplication.

FIG. 8 illustrates an example of matrix multiplication with packed sparsity.

FIGS. 9A-9B illustrate an example of computations in successive fully-connected layers during the inference of an NN with sparse weights inside a coding module of a hybrid block-based video codec.

FIG. 10 illustrates an example workflow of an analysis (e.g., pre-analysis) of the weight matrices of an NN with sparse weights.

FIGS. 11A-11B illustrate an example of the elimination of rows/columns of weights in weight matrices given an input sparse matrix of weights $V$ of size $m \times n$ featuring columns filled (e.g., exclusively) with zeros (0s).

FIGS. 12A-12B illustrate an example of the elimination of rows/columns of weights in weight matrices given an input sparse matrix of weights $V$ of size $m \times n$ featuring columns filled (e.g., exclusively) with zeros (0s), according to an embodiment.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

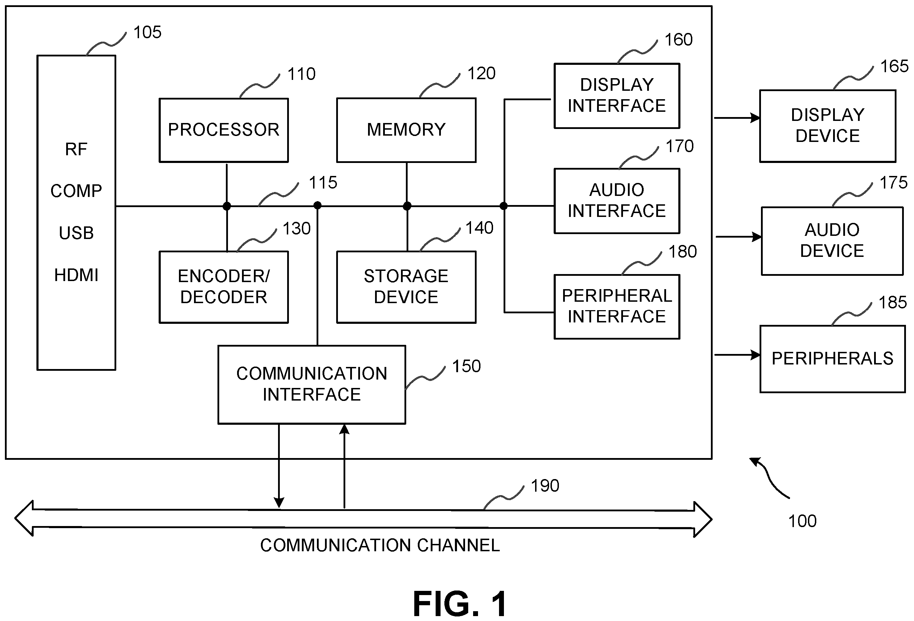

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

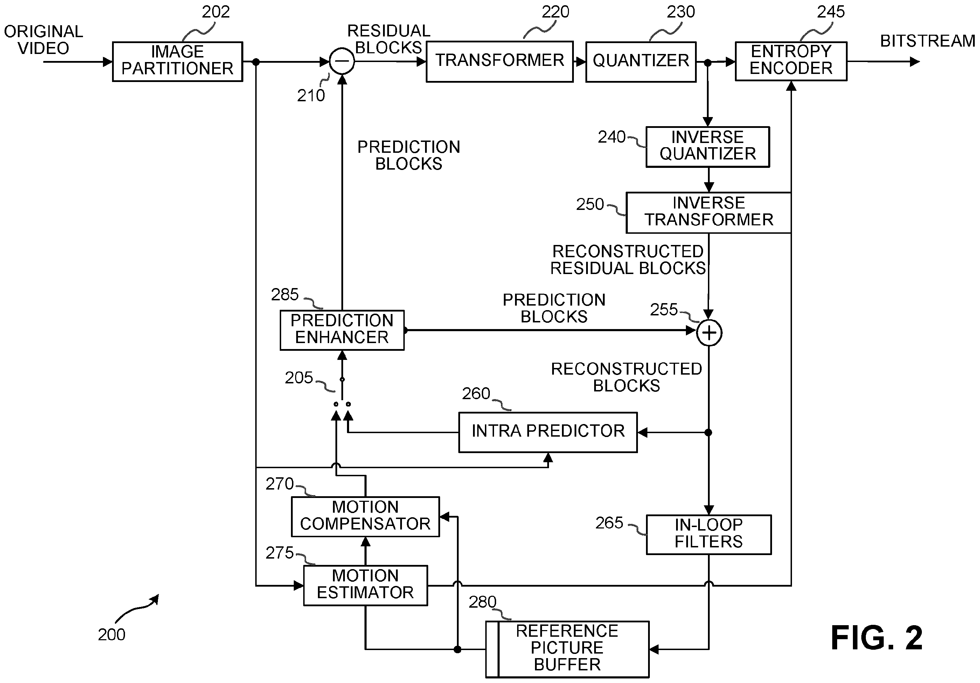

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

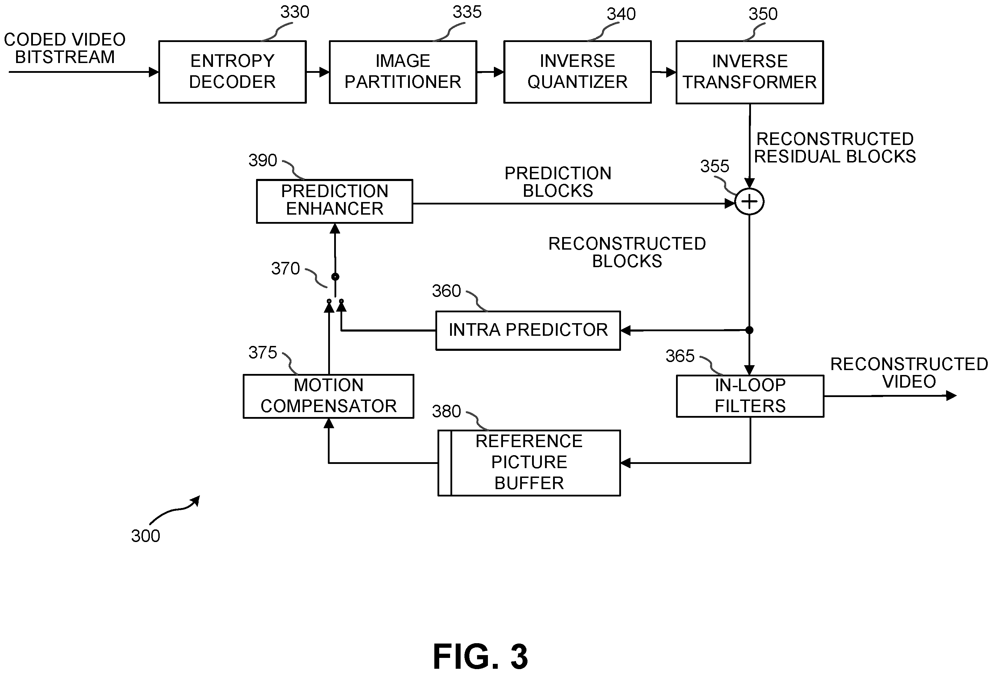

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$, $Cb$, $Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for example, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing video coding (e.g., encoding and/or decoding) by removing wasteful computations in neural networks with sparse weights.

In examples, a device (e.g., a decoder for video decoding) may determine a first neural network (NN). The first NN may be associated with sparse weights. The NN may comprise an architecture and a set of parameters. The device may determine a set of sparse matrices of weights inside the first NN that satisfies a criterion. The device may determine a modified set of matrices of weights. For example, the device may determine the modified set of matrices by processing each sparse matrix of weights in the set of sparse matrices of weights, such that one or more non-zero rows and/or one or more non-zero columns from the corresponding sparse matrix of weights may be transferred to a modified matrix of weights. Further example methods of determining the modified set of matrices of weights are described herein. A second NN may be created by reusing the architecture of the first NN using each modified matrix of weights belonging to the determined modified set of matrices of weights instead of its associated matrix of weights in the first NN.

In examples, a device (e.g., an encoder for video encoding) may determine a first neural network (NN). The first NN may be associated with sparse weights. The NN may comprise an architecture and a set of parameters. The device may determine a set of sparse matrices of weights inside the first NN that satisfies a criterion. The device may determine a modified set of matrices of weights. For example, the device may determine the modified set of matrices by processing each sparse matrix of weights in the set of sparse matrices of weights, such that one or more non-zero rows and/or one or more non-zero columns from the corresponding sparse matrix of weights may be transferred to a modified matrix of weights. Further example methods of determining the modified set of matrices of weights are described herein. A second NN may be created by reusing the architecture of the first NN using each modified matrix of weights belonging to the determined modified set of matrices of weights instead of its associated matrix of weights in the first NN.

In examples, a device (e.g., a decoder for video decoding) may determine a first neural network (NN). The first NN may be associated with sparse weights. The NN may comprise an architecture and a set of parameters. The device may determine a set of sparse matrices of weights inside the first NN that satisfies a criterion. The device may determine a modified set of matrices of weights, for example, by processing each sparse matrix of weights in the set of sparse matrices of weights, such that one or more non-zero rows and/or one or more non-zero columns from the corresponding sparse matrix of weights may be transferred to a modified matrix of weights. A second NN may be created by reusing the architecture of the first NN and replacing each sparse matrix of weights with the corresponding modified matrix of weights belonging to the determined modified set of matrices of weights.

In examples, a device (e.g., an encoder for video encoding) may determine a first neural network (NN). The first NN may be associated with sparse weights. The NN may comprise an architecture and a set of parameters. The device may determine a set of sparse matrices of weights inside the first NN that satisfies a criterion. The device may determine a modified set of matrices of weights, for example, by processing each sparse matrix of weights in the set of sparse matrices of weights, such that one or more non-zero rows and/or one or more non-zero columns from the corresponding sparse matrix of weights may be transferred to a modified matrix of weights. A second NN may be created by reusing the architecture of the first NN and replacing each sparse matrix of weights with the corresponding modified matrix of weights belonging to the determined modified set of matrices of weights.

Wasteful computations may be removed, for example, in hybrid block-based video coding, e.g., where a neural network with sparse weights may be involved in a coding module. Sparse weights may indicate that most of the weights of a neural network are equal to zero (0). In some examples, a coding module including a neural network with sparse weights may be in-loop filtering. In some examples, a coding module including a neural network with sparse weights may be intra prediction. In some examples, a coding module including a neural network with sparse weights may be inter-prediction.

Neural network-based intra prediction is given the broadest definition of neural network-based intra prediction. For example, a neural network-based intra prediction may refer to an intra prediction tool in which a series of one or multiple (e.g., several) layers (e.g., a layer including an affine (or linear) transformation that may be (optionally) followed by a non-linear function) may compute a prediction of a current block from already reconstructed pixels around the current block. A neural network-based intra prediction (e.g., as described herein), matrix-based intra prediction (MIP), and matrix-based intra prediction (e.g., as described herein) are three examples of neural network-based prediction.

Neural network (NN)-based intra prediction may be implemented, for example, in a hybrid block-based video codec (e.g., a Versatile Video Coding (WC) codec), which may be referred to as Neural Network Video Coding (NNVC). In NNVC, NNs may be implemented, for example, via a Small Adhoc Deep-Learning (SADL) library.

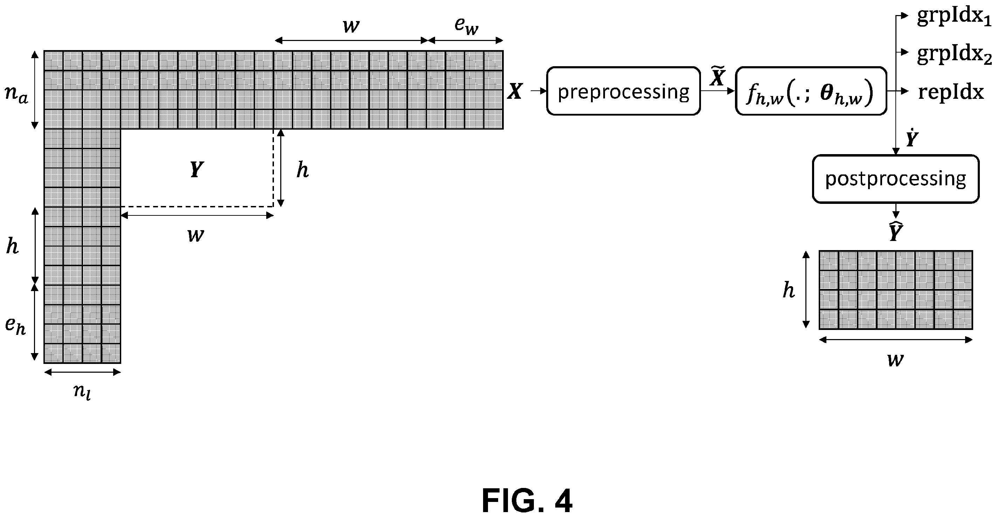

A neural network may generate predictions. The process of computing NN outputs from given input(s) may be referred to as inference. An NN-based intra prediction mode may include one or more NNs. For example, each of seven (7) NNs may predict blocks of a different size, e.g., in $\{4 \times 4, 8 \times 4, 16 \times 4, 32 \times 4, 8 \times 8, 16 \times 8, 16 \times 16\}$. The NN predicting blocks of size $w \times h$ may be denoted $f_{h,w}(.\,;\theta_{h,w})$, where $\theta_{h,w}$ may gather its parameters. For a given $w \times h$ block $Y$, the function $f_{h,w}(.\,;\theta_{h,w})$ may take a preprocessed version $\tilde{X}$ of the context $X$ made of $n_a$ rows of $n_l + 2w + e_w$ reference samples located above the block and $n_l$ columns of $2h + e_h$ reference samples on the left side of the block to provide $\dot{Y}$. The application of a postprocessing to $\dot{Y}$ may yield a prediction $\hat{Y}$ of $Y$, e.g., as shown by example in FIG. 4. The function $f_{h,w}(.\,;\theta_{h,w})$ may return (e.g., two) indices, e.g., $grpIdx_1$ and $grpIdx_2$. Index $grpIdx_i$ may denote the index characterizing the Low Frequency Non-Separable Transform (LFNST) set index. The primary transform coefficients resulting from the application of the Discrete Cosine Transform (DCT)-2 horizontally and the DCT-2 vertically to the residue of the neural network prediction may be transposed (e.g. depending on $grpIdx_i$), for example, if/when lfnstIdx = $i$, $i \in \{1, 2\}$. Index lfnstIdx may denote the LFNST index. lfnstIdx = 0 may indicate that LFNST is not used for coding $Y$. lfnstIdx $\in \{1, 2\}$ may indicate that LFNST is used for coding $Y$, e.g., involving the kernel of index lfnstIdx - 1 inside the LFNST set of a given index. Function $f_{h,w}$

$(.\,;\theta_{h,w})$ may give the index $repIdx \in [\![0, 66]\!]$ of a video coding (e.g., VVC) intra prediction mode (e.g., PLANAR, DC, or directional intra prediction mode) whose prediction of $Y$ from the reference samples surrounding $Y$ may best represent $\hat{Y}$.

FIG. 4 illustrates an example of a prediction of the current $w \times h$ block $Y$ from the context $X$ of reference samples around $Y$ via the NN-based intra prediction mode. In some examples, $w = 8$, $h = 4$ and $n_a = n_l = e_h = e_w = 4$.

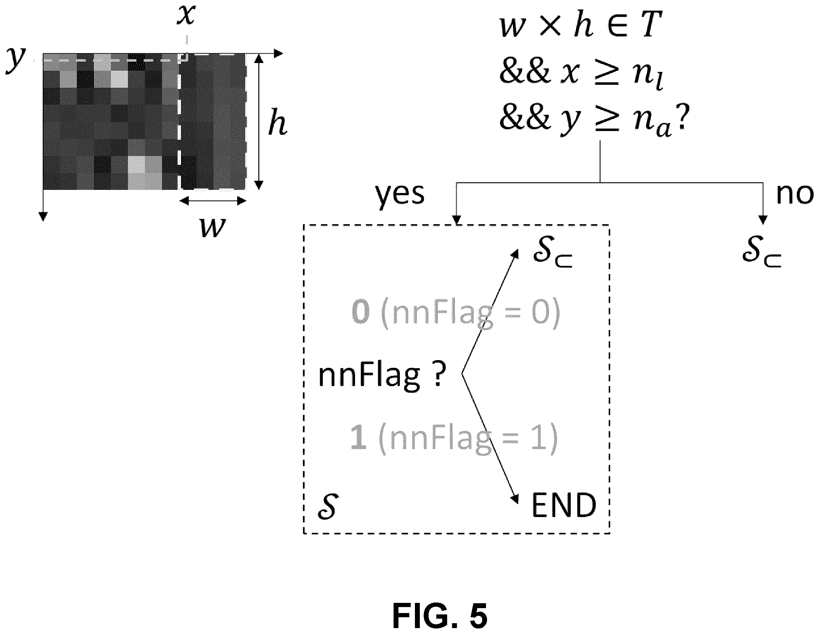

Signaling may include signaling in luma. For a current $w \times h$ luma Coding Block (CB) whose top-left pixel may be at position $(x, y)$ in the current luma channel, the intra prediction mode signaling in luma may be split into multiple (e.g., two) cases. For example (e.g., as shown by example in FIG. 5), if $w \times h \in T$, the nnFlag may appear in the intra prediction mode signaling in luma. A flag value (e.g., nnFlag = 1) may indicate that the NN-based intra prediction mode is selected to predict the current luma CB (e.g., and END). A different flag value (e.g., nnFlag = 0) may indicate that the NN-based intra prediction mode is not selected to predict the current luma CB, in which case other (e.g., regular) intra prediction mode signaling in luma, denoted $S_\subset$, may apply, e.g., as shown by example in FIG. 5. Otherwise (e.g., if w × h is not in the set T), the regular intra prediction mode signaling in luma $S_\subset$ may apply, e.g., as shown by example in FIG. 5. In some examples, the set $T = \{4 \times 4, 4 \times 8, 8 \times 4, 4 \times 16, 16 \times 4, 4 \times 32, 32 \times 4, 8 \times 8, 8 \times 16, 16 \times 8, 8 \times 32, 32 \times 8, 16 \times 16, 16 \times 32, 32 \times 16, 32 \times 32, 64 \times 64\}$.

In some examples (e.g., if $w \times h \in T$ && nnFlag = 1) the NN-based intra prediction may be replaced by PLANAR, for example, if the context of the current luma CB goes out of the bounds of the current luma channel, e.g., $x < n_l \| y < n_a$.

FIG. 5 illustrates an example of intra prediction mode signaling for the current $w \times h$ luma CB, which is shown framed in a dashed line. The coordinates of the pixel at the top-left of the CB may be $(y, x)$. The bin value of an nnFlag value is shown in bold gray. In some examples, $h = 8$, $w = 4$, $x = 8$, and $y = 0$.

Signaling may include signaling in chroma. For the current pair of $w \times h$ chroma CBs having top-left pixel at position $(x, y)$ in the current pair of chroma channels, the intra prediction mode signaling in chroma may be split into multiple (e.g., two) cases. For example, if the luma CB collocated with the pair of chroma CBs is predicted by the NN-based intra prediction mode: the Direct Mode (DM) may become the NN-based intra prediction mode, for example, if $w \times h$ is in the set T (e.g., if $w \times h \in T$); and the DM may be set to PLANAR, for example, if otherwise (e.g., if $w \times h$ is not in the set T). Otherwise (e.g., if the luma CB collocated with the pair of chroma CBs is not predicted by the NN-based intra prediction mode) nnFlagChroma may appear in the intra prediction mode signaling in chroma, for example, if w × h is in the set T (e.g., if $w \times h \in T$), and the regular intra prediction mode signaling in chroma may apply, for example, if otherwise (e.g., if w × h is not in the set T). The flag nnFlagChroma (e.g., if it appears in the intra prediction mode signaling in chroma) may be placed before the DM flag in the decision tree of the intra prediction mode signaling in chroma. A flag value (e.g., nnFlagChroma = 1) may indicate that the NN-based intra prediction mode is selected to predict the current pair of chroma CBs (e.g., and END). A different flag value (e.g., nnFlagChroma = 0) may indicate that the NN-based intra prediction mode is not selected to predict the current pair of chroma CBs, in which case the regular intra prediction mode signaling in chroma may resume from the DM flag.

In some examples (e.g., if $w \times h \in T$ and the DM becomes the NN based intra prediction mode and/or if "$w \times h \in T$ && nnFlagChroma = 1"), the NN-based intra prediction may be replaced by PLANAR, for example, if the context of the current chroma CB goes out of the bounds of the current chroma channel (e.g., $x < n_l \| y < n_a$).

The context may be transformed for neural network prediction. A NN-based intra prediction mode may predict a given $w \times h$ block, for example, if $w \times h \in T$. The NN-based intra prediction mode may not include $f_{h,w}(\,.\,;\theta_{h,w})$. The context of the current block may be down-sampled vertically (e.g., by a factor $\delta$), down-sampled horizontally (e.g., by a factor $\gamma$), and/or transposed, for example, before preprocessing shown in FIG. 4. The prediction of the current block may (e.g., then) be transposed, up-sampled vertically (e.g., by the factor $\delta$), and/or up-sampled horizontally (e.g., by the factor $\gamma$), for example, after"postprocessing shown in FIG. 4. The transposition of the context of the current block and the prediction, $\delta$, and $\gamma$ may be chosen, for example, so that a neural network belonging to the NN-based intra prediction mode may be used for prediction, e.g., as shown by example in

Table 1.

Table 1 - Example of determining whether to transpose and/or up/downsample the context of a current $w \times h$ block and the prediction of the block

| $w \times h$ | transposition | $\gamma$ | $\delta$ | NN used for prediction |
|---|---|---|---|---|
| $4 \times 4$ | no | 1 | 1 | $f_{4,4}(\cdot, \theta_{4,4})$ |
| $8 \times 4$ | no | 1 | 1 | $f_{4,8}(\cdot, \theta_{4,8})$ |
| $4 \times 8$ | yes | 1 | 1 | $f_{4,8}(\cdot, \theta_{4,8})$ |
| $16 \times 4$ | no | 1 | 1 | $f_{4,16}(\cdot, \theta_{4,16})$ |
| $4 \times 16$ | yes | 1 | 1 | $f_{4,16}(\cdot, \theta_{4,16})$ |
| $32 \times 4$ | no | 1 | 1 | $f_{4,32}(\cdot, \theta_{4,32})$ |
| $4 \times 32$ | yes | 1 | 1 | $f_{4,32}(\cdot, \theta_{4,32})$ |
| $8 \times 8$ | no | 1 | 1 | $f_{8,8}(\cdot, \theta_{8,8})$ |
| $16 \times 8$ | no | 1 | 1 | $f_{8,16}(\cdot, \theta_{8,16})$ |
| $8 \times 16$ | yes | 1 | 1 | $f_{8,16}(\cdot, \theta_{8,16})$ |
| $32 \times 8$ | no | 2 | 1 | $f_{8,16}(\cdot, \theta_{8,16})$ |
| $8 \times 32$ | yes | 1 | 2 | $f_{8,16}(\cdot, \theta_{8,16})$ |
| $16 \times 16$ | no | 1 | 1 | $f_{16,16}(\cdot, \theta_{16,16})$ |
| $32 \times 16$ | no | 2 | 1 | $f_{16,16}(\cdot, \theta_{16,16})$ |

(continued)

| $w \times h$ | transposition | $\gamma$ | $\delta$ | NN used for prediction |
|---|---|---|---|---|
| 16 × 32 | no | 1 | 2 | $f_{16,16}(., \theta_{16,16})$ |
| 32 × 32 | no | 2 | 2 | $f_{16,16}(., \theta_{16,16})$ |
| 64 × 64 | no | 4 | 4 | $f_{16,16}(., \theta_{16,16})$ |

Table 1 shows an example of a decision (e.g., based on block size $w \times h$) whether to transpose the context of the current $w \times h$ block to be predicted and the prediction of the block, determination/selection of the value of horizontal up/downsampling factor $\gamma$, determination/selection of the value of vertical up/downsampling factor $\delta$, and determination/selection of the neural network belonging to the NN-based intra prediction mode that may be used for prediction for each $w \times h \in T$.

Matrix-based intra prediction may replace other (e.g., conventional) intra prediction modes (e.g., in Enhanced Compression Model (ECM)).

A given block may be predicted, for example, by multiplying weights by the reference samples inside an L-shape causal neighborhood template around the given block to compute the prediction samples, which may replace other (e.g., conventional) modes of intra prediction. The L-shape causal neighborhood template may be identical to the L-shape causal neighborhood template shown by example on the left side of FIG. 4, for example, if/when $n_a = n_l = 4$ and $e_h = e_w = 0$. A given $w \times h$ block may be predicted. The vector of $k \in \mathbb{N}^*$ reference samples in the L-shape causal neighborhood template may be denoted as $\tilde{X}$. The matrix of $khw$ weights may be denoted as $W$. The vector $\dot{Y}$ of $hw$ predicted samples may be computed by vector-matrix multiplication, for example, in accordance with Eq. (1).

$$\dot{Y} = \tilde{X}W \qquad (1)$$

The replacement of (e.g., conventional) intra prediction modes by matrix-based intra prediction may be enabled, for example, (e.g., only) for block sizes of $w \leq 16$ and $h \leq 16$, and for modes of indices 0,1, and 2 + 4 * $i$, where $i = \{0, 1, 2, ..., 16\}$, e.g., every 4 modes. A conventional intra prediction mode may refer to an intra prediction mode in {PLANAR, DC, 65 directional intra prediction modes} (e.g., inherited from VVC).

No extra signaling may occur if/when matrix-based intra prediction is enabled, for example, if (e.g., conventional) intra prediction modes are replaced by matrix-based intra prediction.

A sparse matrix or sparse array may be a matrix in which most of the elements are zero (0). In some examples of NN prediction with large matrices, which may (e.g., tend to) be sparse. In an example, the complexity of the model may be reduced, e.g., because zero coefficients may not need to be processed.

Storage and manipulation of sparse matrices on a computer may (e.g., beneficially) use (e.g., specialized) algorithms and data structures that take advantage of the sparse structure of the matrix.

A coordinate list (COO) may store a list of (row, column, value) tuples. The entries may be sorted (e.g., first) by row index and (e.g., then) by column index, for example, to improve random access times.

The compressed sparse row (CSR), compressed row storage (CRS), or Yale format may represent a matrix M by three (e.g., one-dimensional) arrays, which may, respectively, include nonzero values, the extents of rows, and column indices. CSR, CRS, and Yale format may be similar to COO, but they compress the row indices, which may allow fast row access and matrix-vector multiplications (Mx). Compressed sparse column (CSC or CCS) may be similar to CSR, except that values may be read first by column.

The CSR format may store a sparse m × n matrix M in row form using three (e.g., one-dimensional) arrays (e.g., V, COL_INDEX, ROW_INDEX). The number of nonzero entries in M may be denoted as NNZ. Zero-based indices may be used here.

The arrays V and COL_INDEX may be of length NNZ. The arrays V and COL_INDEX may include the non-zero values and the column indices of those values, respectively. COL_INDEX may include the column in which the corresponding entry V is located.

The array ROW_INDEX may be of length m + 1. The array ROW_INDEX may encode the index in V and COL_INDEX where the given row starts, which may be equivalent to ROW_INDEX[j] encoding the total number of nonzeros above row j. The last element may be NNZ, e.g., a fictitious index in V immediately after the last valid index NNZ - 1.

For example, a matrix may be as follows:

$$5\ 0\ 0\ 0$$
$$0\ 8\ 0\ 0$$
$$0\ 0\ 3\ 0$$
$$0\ 6\ 0\ 0$$

The matrix is a $4 \times 4$ matrix with 4 nonzero elements. The values of V, COL_INDEX, and ROW_INDEX may be, for example, V = [ 5 8 3 6 ], COL_INDEX = [ 0 1 2 1 ] (e.g., indicating column positions 0-3 of non-zero numbers 5, 8, 3, and 6), and ROW_INDEX = [ 0 1 2 3 4 ], for example, assuming a zero-indexed language. A row may be extracted, for example, by (e.g., first) defining row_start = ROW_INDEX[row] and row_end = ROW_INDEX[row + 1]. Slices may be taken from V and COL_INDEX, e.g., starting at row_start and ending at row_end. Row 1 (e.g., the second row) of the matrix may be extracted, for example, by setting row_start=1 and row_end=2. Then the slices may be V[1:2] = [8] and COL_INDEX[1:2] = [1]. As indicated, in row 1 there is one element at column 1 with value 8.

The CSR representation of the 4x4 matrix may include 13 entries (e.g., total entries for V, COL_INDEX, and ROW_INDEX), e.g., compared to 16 entries in the original 4x4 matrix. The CSR format may save on memory, for example, (e.g., only) if/when NNZ < (m (n - 1) - 1) / 2.

In some examples (e.g., if/when a matrix has only one column (e.g., a vector case)), only V and ROW_INDEX may be defined. Matrix data may be stored as a vector, for example, if the matrix dimensions are defined and the computation using the matrix is regular (e.g., matrix elements are accessed in raster scan).

Other sparse representation formats may be utilized. Other sparse matrix representation formats may include, for example, the following format: store raw non-zero values in a vector; store the number of non-zero elements per row (e.g., respectively column); store the column (e.g., respectively row) index of each non-zero element in each row (e.g., respectively column); and (e.g., optionally) store the total number of non-zero elements in the matrix (e.g., otherwise may be deduced from non-zero elements per row).

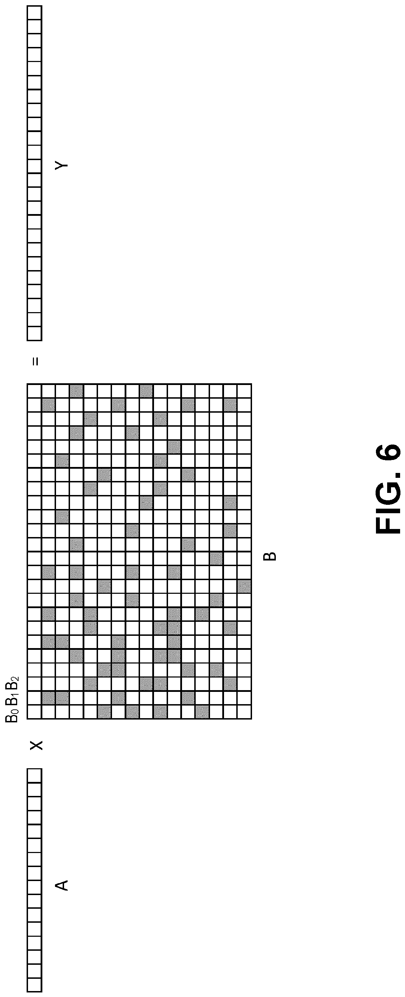

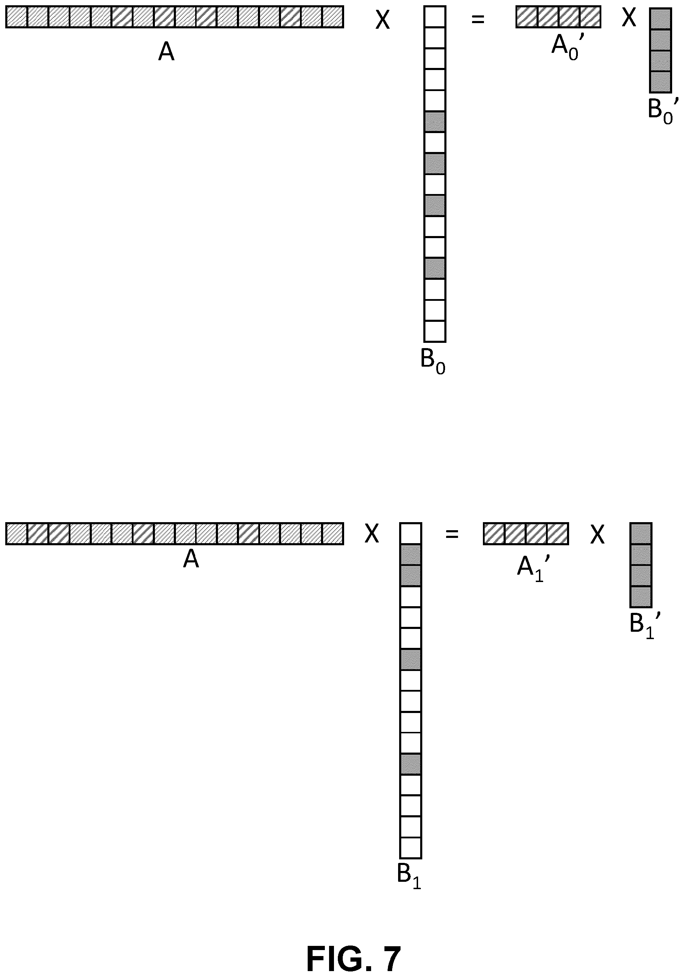

Matrix multiplication may be implemented (e.g., using the foregoing format), for example, by accessing each non-zero number of matrix elements of the column (e.g., respectively row), stored contiguously and elements of the other operand (e.g., vector or matrix) with the index offsets from the stored indices, e.g., as depicted by example in FIG. 6 and FIG. 7. The format may be convenient for matrix multiplication, although individual elements of the matrix may not be (e.g., directly) accessed.

FIG. 6 illustrates an example of matrix multiplication using a sparse matrix. Non-zero elements (e.g., only non-zero elements) of the matrix B and corresponding vector elements of A for each column may be used for multiplication and accumulation operations.

FIG. 7 illustrates an example of matrix multiplication. As shown in FIG. 7, the vector A0' may not be (e.g., explicitly) computed. The vector A0' may be obtained from A, where (e.g., only) elements referred to by the indices associated with the given column of B being processed (e.g., corresponding to non-zero elements of B) may be stored/kept. The vector A0' may be computed (e.g., on the fly), for example, element per element for classical matrix multiplication implementation, or by several elements if the matrix multiplication is implemented using parallelism, such as Single Instruction Multiple Data (SIMD) instructions. As shown in FIG. 7, multiplication and accumulation of the vector A is performed with the first two columns of A (e.g., B0 and B1). As shown in FIG. 6, B0 and B1 may be the first and second columns of B. B0' and B1' may be contiguous non-zero coefficients of the two first columns of B. A0' and A1' may be corresponding elements of vector A, e.g., using the indices of the non-zero elements of B0 and B1.

Non-zero data may be packed. Matrix multiplications (e.g., on modern processors) may take advantage of Single Instruction Multiple Data (SIMD) instructions, e.g., also called vectorized instructions. The same operation may be performed on multiple contiguous elements in memory. Matrix multiplication may be accelerated, for example, by leveraging the (e.g., full) hardware memory bit-depth to access multiple elements at the same time and perform operations in parallel.

Elements of at least one of the operands may not be contiguous (e.g., because of the sparse characteristic), which may involve (e.g., require) an indirection (e.g., an offset, which may be different for each element), which is shown by example in FIG. 7. The indirections (e.g., offsets) may reduce SIMD performance. SIMD performance may be improved, for example, by constraining matrix sparsity by block, e.g., where non-zero elements may be packed contiguously.

The packing of non-zero coefficients may be obtained with a (e.g., specific) learning algorithm, for example, if the matrix is a result of a learning algorithm. The packing of non-zero coefficients may (e.g., often) be obtained, for example, at the cost of reduced performance, e.g., in terms of prediction or fitting of the matrix. For example, the result of packing of non-zero coefficients may be a compromise/tradeoff between computation complexity and prediction performance.

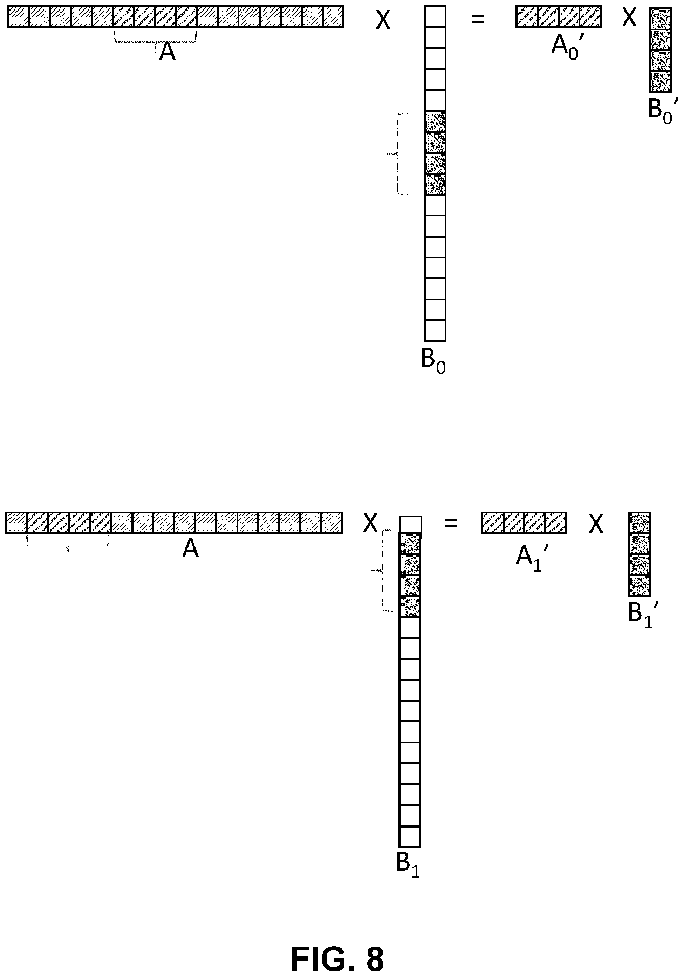

In some examples (e.g., if/when the packing of the non-zero elements is adapted to the hardware), (e.g., all) the non-zero elements for an (e.g., one) SIMD instruction (e.g., corresponding to the SIMD instruction bit-depth) may have the same offset, which may result in (e.g., all) the non-zero elements being contiguous, e.g., as shown by example in FIG. 8.

FIG. 8 illustrates an example of matrix multiplication with packed sparsity. FIG. 8 shows an example of multiplication and accumulation of the vector A with the first two columns of A (e.g., B0 andB1). As shown in FIG. 6, B0 and B1 may be the first and second columns of B. B0' and B1' may be contiguous non-zero coefficients of the two first columns of B. A0' and A1' may be corresponding elements of vector A, which may (e.g., also) be contiguous. Elements of A0' with indices of non-zero elements of B0 may have the same offset. Elements of A1' with indices of non-zero elements of B1 may have the same offset.

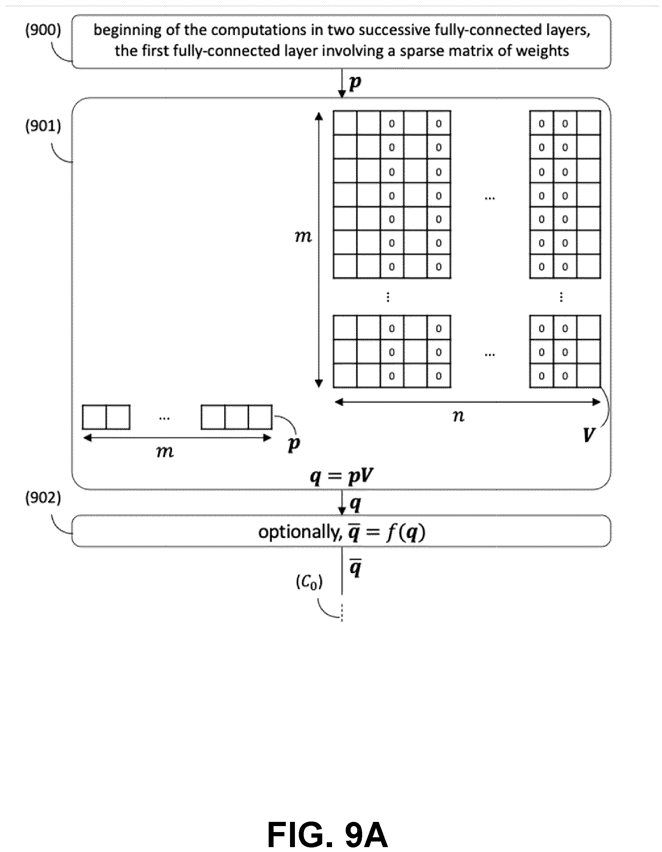

An NN with sparse weights may be trained. A sparse matrix of weights of the (e.g., trained) NN may feature columns filled (e.g., exclusively) with zeros (0s). A sparse matrix of weights of the (e.g., trained) NN may feature rows filled (e.g., exclusively) with zeros (0s). A hybrid block-based video codec including a coding module involving the NN with sparse weights (e.g., during an inference of the NN) may encounter a layer where an input vector may be multiplied with a sparse matrix of weights. The columns including (e.g., exclusively) zeros (e.g., 0s) may not yield wasteful computations, for example, if the codec uses an (e.g., adequate) algorithm for multiplying a vector and a sparse matrix (e.g., as described herein). For example, CSR may be adapted to ignore the columns filled (e.g., exclusively) with zeros (0s) in the sparse matrix of weights. Similarly, during an inference of the NN, e.g., in a layer where an input vector may be multiplied with a sparse matrix of weights, the rows including (e.g., exclusively) zeros (0s) may not generate wasteful computations, for example, if an (e.g., adequate) algorithm for multiplying a vector and a sparse matrix is used. During an inference of the NN, if an input vector is multiplied with a sparse matrix of weights featuring columns filled (e.g., exclusively) with zeros (0s), e.g., in a given layer, wasteful computations may appear in the next multiplication between an input vector and a matrix of weights, e.g., in the next layer. An example of computations in successive layers is shown by example in FIGS. 9A-9B.

FIGS. 9A-9B illustrate an example of computations in successive fully-connected layers during the inference of an NN with sparse weights inside a coding module of a hybrid block-based video codec( e.g. Enhanced Compression Model version 14 (ECM-14.0)). The first fully-connected layer may involve a sparse matrix of weights.

A fully-connected layer may refer to a layer in which the input vector may be multiplied with a matrix of weights. Biases may be (e.g., optionally) added. A non-linear function may (e.g., optionally) apply. For simplicity and conciseness, a fully-connected layer is described without bias.

As shown in FIG. 9A, at (900), the computations in (e.g., two) successive fully-connected layers (e.g., the first fully-connected layer involving a sparse matrix of weights) may begin. At (901), the input vector $p$ of size $m$ may be multiplied with the sparse weight matrix $V$ of size $m \times n,$ which may yield $q = pV.$ $q$ may have size $n.$ $V$ may include columns filled (e.g., exclusively) with zeros (0s), as shown by example in the columns of indices 2, 4, $n$ - 3, and $n$ - 2. By denoting $\mathcal{J}$ the set of indices of columns of $V$ filled (e.g., exclusively) with zeros (0s), $\forall i \in \mathcal{J}$ , $q_i = 0.$

At (902), the pointwise non-linear function $f$ may (e.g., optionally) apply to $q$, which may yield $\bar{q}.$ In the examples, it may be assumed that $f(0) = 0.$ The assumption may be valid, for example, if $f$ is the hyperbolic tangent or ReLU or LeakyReLU or PReLU. Therefore, $\forall i \in \mathcal{J}$ , $\bar{q}_i = 0.$

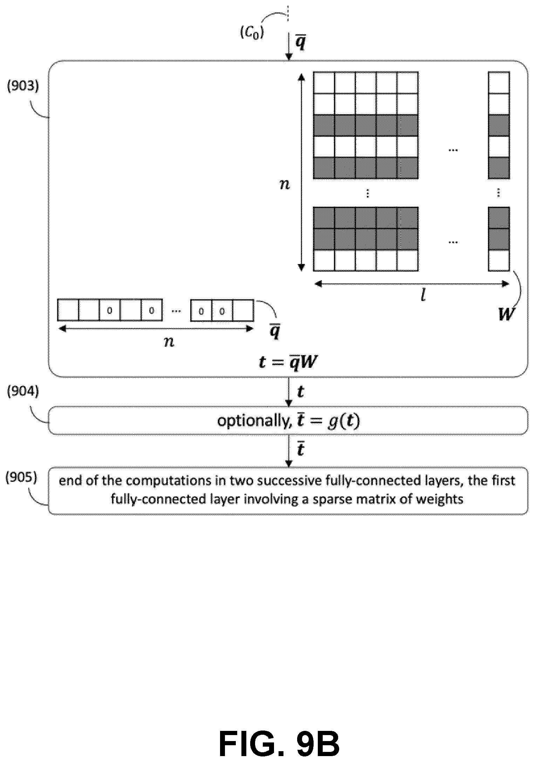

As shown in FIGS. 9A and 9B, $(C_0)$ connects (902) to (903).

As shown in FIG. 9B, at (903), the input vector $\bar{q}$ of size $n$ may be multiplied with the weight matrix $W$ of size $n \times l$, which may yield $t = \bar{q}W,$ where $t$ may have size $l.$

At (904), the non-linear function $g$ may (e.g., optionally) apply to $t$, which may yield $\bar{t}.$ For example, $g$ may be the sigmoid or the hyperbolic tangent or ReLU or LeakyReLU or PReLU.

At (905), the computations in (e.g., two) successive fully-connected layers (e.g., the first fully-connected layer involving a sparse matrix of weights) may end.

At (903), since $\forall i \in \mathcal{J}$ , $q_i = 0,$ the multiplication of $\bar{q}_i$ with any coefficient belonging to the row of $W$ of index $i$ may return zero (0), which results in wasteful computations. As shown in FIGS. 9A-9B, the rows of $W$ multiplied with coefficients of $\bar{q}$ equal to zero (0) are colored in dark gray.

As described herein, wasteful computations may be eliminated for an NN with sparse weights featuring rows/columns filled (e.g., exclusively) with zeros (0s).

An analysis (e.g., pre-analysis) of the weight matrices of an NN may target the removal of (e.g., and may remove) rows/columns of weights in the weight matrices, for example, for a hybrid block-based video codec (e.g., ECM-14.0) including a coding module (e.g. in-loop filter or NN-based intra prediction mode or NN-based inter prediction mode) that may include at least one NN with sparse weights, e.g., where one or more (e.g., some) sparse matrices of weights may feature rows/columns filled (e.g., exclusively) with zeros (0s). The NN before the application of the pre-analysis and the NN resulting from the application of the pre-analysis may yield (e.g., exactly) the same output for a (e.g., any) given input, while the NN resulting from the application of the analysis (e.g., pre-analysis) may involve relatively less wasteful computations during its inference. The analysis (e.g., pre-analysis) may occur, for example, as indicated by one or more of the following: outside the hybrid block-based video codec, e.g., at the end of the training of the NN with sparse weights; outside the used hybrid block-based video codec, e.g., if/when converting the graph of the NN with sparse weights into a graph whose format may be compatible with the hybrid block-based video codec (e.g., the conversion via SADL); inside the hybrid block-based video codec, e.g., if/when loading the graph of the NN with sparse weights at the beginning of the encoding/decoding of a given video sequence; and/or inside the used hybrid block-based video codec, e.g., during the encoding/decoding of a given video sequence, such as if/when updating the graph of the NN with sparse weights following an online update of its parameters.

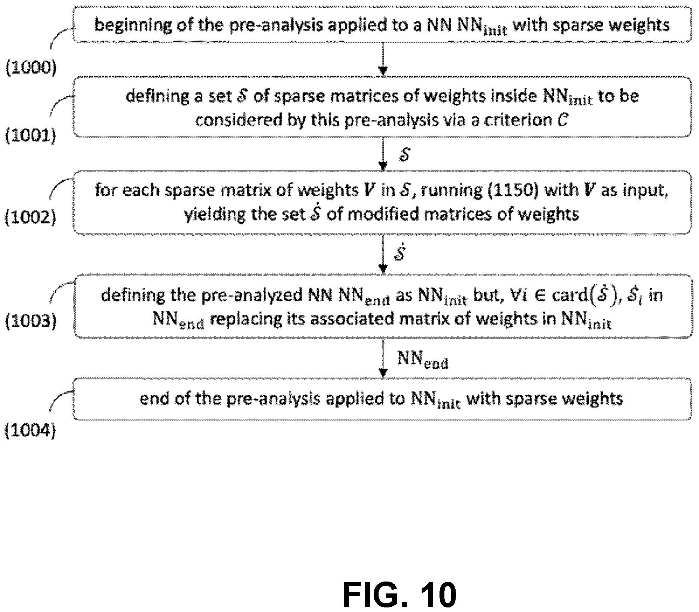

A hybrid block-based video codec may include a coding module using an NN with sparse weights, where some sparse matrices of weights may feature rows/columns filled (e.g., exclusively) with zeros (0s). An example workflow of an analysis (e.g., pre-analysis) of weight matrices of an NN (e.g., aiming at removing rows/columns of weights in the weight matrices) is shown in FIG. 10.

FIG. 10 illustrates an example workflow of an analysis (e.g., pre-analysis) of the weight matrices of an NN with sparse weights. The NN may be involved in a coding module of a hybrid block-based video codec of interest (e.g., ECM-14.0).

As shown in FIG. 10, at (1000), the analysis (e.g., pre-analysis) applied to the NN with sparse weights, e.g., denoted $NN_{init}$, may begin.

At (1001), a set $\mathcal{S}$ of sparse matrices of weights inside $NN_{init}$ that may be considered by the analysis (e.g., pre-analysis) may be defined via a criterion C.

For example, criterion $\mathcal{C}$ may state that a sparse matrix of weights $V$ may be added to $\mathcal{S}$ if, in $NN_{init}$, between the vector-matrix multiplication involving $V$ and the next vector-matrix multiplication, there exists no operation turning an input coefficient at zero (0) into $\alpha \neq 0$.

Criterion $\mathcal{C}$ may state that $V$ may not be added to $\mathcal{S}$, for example, if, in $NN_{init}$, the operation between the vector-matrix multiplication involving $V$ and the next vector-matrix multiplication adds to its input vector non-zero biases.

Criterion $\mathcal{C}$ may state that $V$ may not be added to $\mathcal{S}$, for example, if, in $NN_{init}$, the operation between the vector-matrix multiplication involving $V$ and the next vector-matrix multiplication is the sigmoid non-linearity.

Criterion $\mathcal{C}$ may state that $V$ may be added to $\mathcal{S}$, for example, if, in $NN_{init}$, the operation between the vector-matrix multiplication involving $V$ and the next vector-matrix multiplication multiplies its input vector with a value $\beta$ (e.g., $\beta$ = -1 or $\beta$ = 2).

Criterion $\mathcal{C}$ may state that $V$ may be added to $\mathcal{S}$, for example, if, in $NN_{init}$, the operation between the vector-matrix multiplication involving $V$ and the next vector-matrix multiplication multiplies elementwise its input vector with a vector $\gamma$ of multipliers. For example, $\gamma$ may be learned jointly with the other NN parameters or, for (e.g., another) example, a coefficient in $\gamma$ may belong to {-1,1}.

Criterion C may state that $V$ may be added to $\mathcal{S}$, for example, if, in $NN_{init}$, the operation between the vector-matrix multiplication involving $V$ and the next vector-matrix multiplication is the LeakyReLU non-linearity.

Criterion C may state that $V$ may be added to $\mathcal{S}$, for example, if, in $NN_{init}$, the operation between the vector-matrix multiplication involving $V$ and the next vector-matrix multiplication is the ReLU non-linearity.

For example, criterion C may state that a sparse matrix of weights $V$ may be added to $\mathcal{S}$ if, in $NN_{init}$, the cascade $h$ of operations between the vector-matrix multiplication involving $V$ and the next vector-matrix multiplication turns an input coefficient at zero (0) into zero (0).

Criterion C may state that $V$ may be added to $\mathcal{S}$, for example, if, in $NN_{init}$, $h(.) = \min(LeakyReLU( . ), \rho)$, $\rho > 0$. For example, $\rho$ = 4 or $\rho$ = 5.

Criterion C may state that $V$ may be added to $\mathcal{S}$, for example, if, in $NN_{init}$, $h(.) = \max(LeakyReLU( . ), \rho)$, $\rho < 0$. For example, $\rho$ = -4 or $\rho$ = -5.

Criterion C may state that $V$ may be added to $\mathcal{S}$, for example, if, in $NN_{init}$, $h(.) = \min(ReLU( . ), \rho)$, $\rho > 0$. For example, $\rho$ = 11 or $\rho$ = 3.

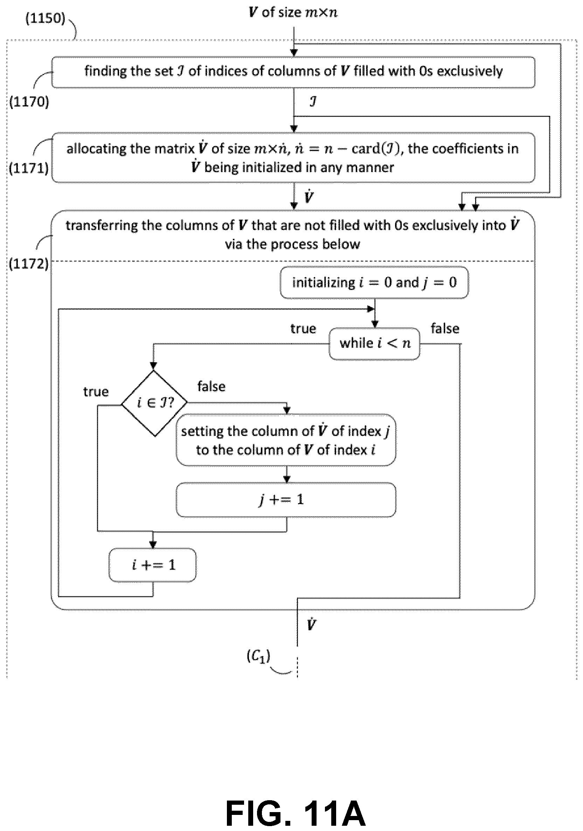

At (1002), for each sparse matrix of weights $V$ in $\mathcal{S}$, $V$ may be fed into (1150) (e.g., shown in FIG. 11A) FIGS. 11A-11B and the matrices of weights returned by the different runs of (1150) (e.g., shown in FIG. 11A) may be put into the set $\dot{\mathcal{S}}$.

At (1003), the pre-analyzed NN $NN_{end}$ may be defined with the same architecture and same parameters as $NN_{init}$, except that, $\forall i \in card(\dot{\mathcal{S}})$, $\dot{\mathcal{S}}_i$ in $NN_{end}$ may replace its associated matrix of weights in $NN_{init}$, where $card(\dot{\mathcal{S}})$ may denote the cardinality of $\dot{\mathcal{S}}$.

At (1004), the pre-analysis applied to the NN with sparse weights, denoted $NN_{init}$, may end.

FIGS. 11A-11B illustrate an example of the elimination of rows/columns of weights in weight matrices given an input sparse matrix of weights $V$ of size $m \times n$ featuring columns filled (e.g., exclusively) with zeros (0s).

As shown in FIGS. 11A, at (1150), rows/columns of weights in weight matrices may be eliminated given an input sparse matrix of weights *V* featuring columns filled (e.g., exclusively) with zeros (0s).

At (1170), the set J of indices of columns of *V* filled (e.g., exclusively) with zeros (0s) may be found.

At (1171), the matrix $\dot{V}$ of size $m \times \dot{n}$, $\dot{n} = n$ - card($\mathcal{J}$), may be allocated, where card($\mathcal{J}$) may denote the cardinality of $\mathcal{J}$. The coefficients in *V* may be initialized (e.g., in any manner). For example, the coefficients in *V* may be initialized to zero (0). For (e.g., another) example, the coefficients in *V* may be initialized by drawing from a uniform distribution of support [-4, 4]. For (e.g., another) example, the coefficients in *V* may be initialized by drawing from a Gaussian distribution centered at zero (0), e.g., with standard deviation 3.

At (1172), the columns of *V* that are not filled (e.g., exclusively) with zeros (0s) may be transferred into *V*.

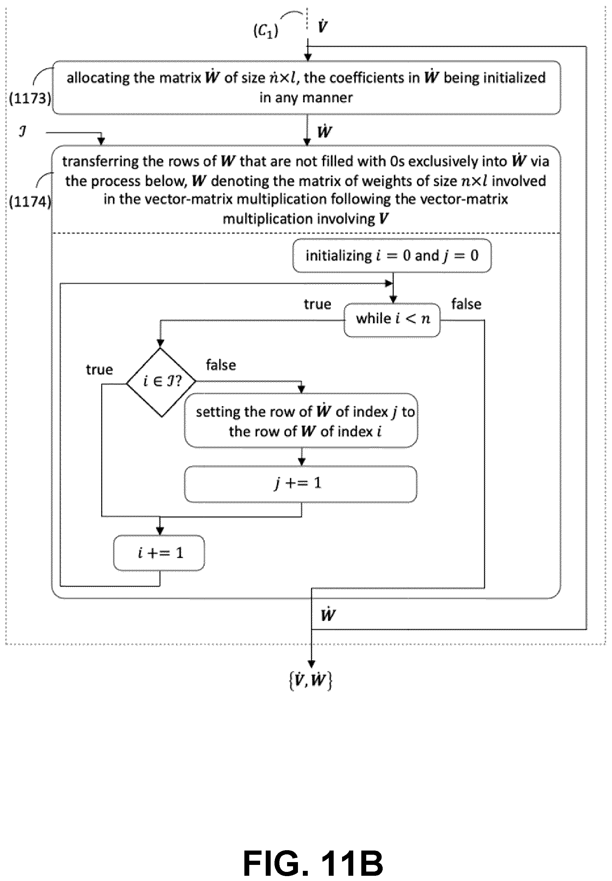

As shown in FIGS. 11A and 11B, ($C_1$) may connect (1172) to (1173).

As shown in FIG. 11B. at (1173), the matrix $\dot{W}$ of size $\dot{n} \times l$ may be allocated. The coefficients in $\dot{W}$ may be initialized (e.g., following any process). For example, the coefficients in *W* may be initialized to - 1, 2, etc.

At (1174), the rows of *W* that are not filled (e.g., exclusively) with zeros (0s) may be transferred into $\dot{W}$. *W* may refer to the matrix of weights of size $n \times l$ involved in the vector-matrix multiplication following the vector-matrix multiplication involving *V*.

In some examples, $NN_{init}$ may be an NN cascading a first fully-connected layer with sparse matrix of weights *U* of size $k \times m$, without any bias, with LeakyReLU, a second fully-connected layer with sparse matrix of weights *V* of size $m \times n$, without any bias, with LeakyReLU, and a third fully-connected layer with (non-sparse) matrix of weights *W* of size $n \times l$, without any bias, without any non-linear function. Said differently, $NN_{init}$ may be expressed as, for a given input vector *x* of size *k*, $NN_{init}(x)$ = LeakyReLU(LeakyReLU(xU)V)W. Criterion C may state that a sparse matrix of weights *T* may be added to $\mathcal{S}$ if, in $NN_{init}$, *T* is not part of the first fully-connected layer and, between the vector-matrix multiplication involving *T* and the next vector-matrix multiplication, there exists no operation turning an input coefficient at 0 into $\alpha \neq 0$.

Continuing with the example, as shown in FIG. 10, at (1001), $\mathcal{S} = \{V\}$. At (1002), $\dot{\mathcal{S}} = \{\dot{V}, \dot{W}\}$ following (1150), as shown in FIG. 11A. At (1003), $NN_{end}$ may be identical to $NN_{init}$, except that, in $NN_{end}$, $\dot{V}$ may replace *V* and *W* may replace *W*.

In some examples, $NN_{init}$ may be an NN cascading a first fully-connected layer with sparse matrix of weights *U* of size $k \times m$, with vector of biases *b* of size *m*, with ReLU, a second fully-connected layer with sparse matrix of weights *V* of size $m \times n$, without any bias, with ReLU, and a third fully-connected layer with (non-sparse) matrix of weights *W* of size $n \times l$, with vector of biases *c* of size *l*, without any non-linear function. Said differently, $NN_{init}$ may be represented as, for a given input vector *x* of size *k*, $NN_{init}(x)$ = ReLU(ReLU(xU + b)V)W + c. Criterion C may state that a sparse matrix of weights *T* may be added to $\mathcal{S}$ if, in $NN_{init}$, *T* is not part of the first fully-connected layer and, between the vector-matrix multiplication involving *T* and the next vector-matrix multiplication, there exists no operation turning an input coefficient at 0 into $\alpha \neq 0$.

Continuing with the example, as shown in FIG. 10, at (1001), $\mathcal{S} = \{V\}$. At (1002), $\dot{\mathcal{S}} = \{\dot{V}, \dot{W}\}$ following (1150), as shown in FIG. 11A. At (1003), $NN_{end}$ may be identical to $NN_{init}$, except that, in $NN_{end}$, $\dot{V}$ may replace *V* and $\dot{W}$ may replace *W*.

In some examples, a vector/matrix convention may be changed. In the examples pertaining to FIG. 10 and FIGS. 11A-11B, (e.g., all) the vectors may be row vectors and each shown vector-matrix multiplication may feature the multiplication of a row vector with a matrix, column by column. In some examples, the convention may be changed without modifying the principle of the analysis (e.g., pre-analysis) of the weight matrices of an NN with sparse weights. For example, (e.g., all) the vectors may become column vectors and each shown matrix-vector multiplication may feature the multiplication of a matrix, row by row, with a column vector.

In some examples, an analysis (e.g., pre-analysis) may target (e.g., and may provide) an optimal use of SIMD. In a hybrid block-based video codec (e.g., ECM-14.0) in which a coding module may involve an NN, during an inference of the NN (e.g., for using optimal SIMD), each dimension of a vector/matrix inside the NN may be multiple of $s = 2^r$, $r \in [\![2,10]\!]$. For example, if, in the NN, each NN parameter and each NN intermediate representation are 16-bit signed integers, each dimension of vector/matrix inside the NN may be a multiple of $s = 32$, e.g., for use of AVX512. For example, if, in the NN, each NN parameter and each NN intermediate representation are 16-bit signed integers, each dimension of vector/matrix inside the NN may be a multiple of $s = 16$, e.g., for use of AVX2.

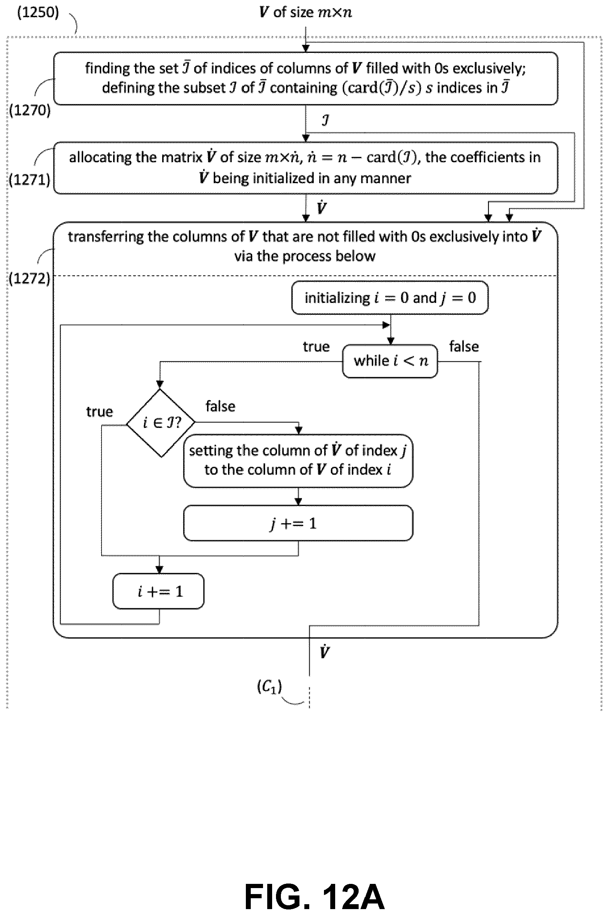

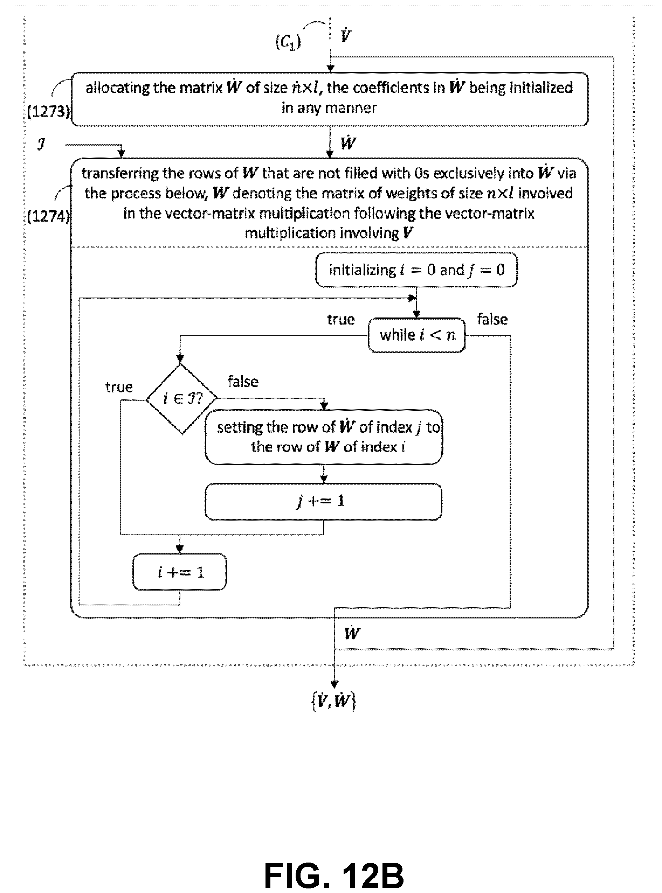

The observation of optimal use of SIMD may be implemented. For example, as shown in FIG. 11A, at (1150), a matrix of weights with each dimension being a multiple of s may be returned. An example of the implementation of optimal use of SIMD is shown in FIGS. 12A-12B.

FIGS. 12A-12B illustrate an example of the elimination of rows/columns of weights in weight matrices given an input sparse matrix of weights *V* of size $m \times n$ featuring columns filled (e.g., exclusively) with zeros (0s), according to an embodiment.

A difference between FIGS. 11A-11B FIGS. 11A-11Band FIGS. 12A-12B may be observed in a comparison of (1170) in FIG. 11A to (1270) in FIG. 12A. In an example, 1171-1174 shown in FIGS. 11A-11B may be similar to 1271-1274 in FIGS. 12A-12B (e.g., 1171 may be similar to 1271, etc.). As shown in FIGS. 12A-12B, at (1270), the set $\bar{\mathcal{J}}$ of indices of columns of $V$ filled (e.g., exclusively) with zeros (0s) may be found. The subset $\mathcal{J}$ of $\bar{\mathcal{J}}$ containing (card($\bar{\mathcal{J}}$ )/$s$) $s$ indices in $\bar{\mathcal{J}}$ may (e.g., then) be created, for example, so that card($\mathcal{J}$ ) may be multiple of $s$. For example, if, in the NN, each NN parameter and each NN intermediate representation are 16-bit signed integers, it may be helpful for AVX2 that $s = 16$. For example, if, in the NN, each NN parameter and each NN intermediate representation are 16-bit signed integers, it may be helpful for AVX512 that s = 32. In some examples, $\mathcal{J} = \bar{\mathcal{J}}_{[0:\,((\mathrm{card}(\bar{\mathcal{J}})/s)\,s)-1]}$, which may mean that $\mathcal{J}$ may include the first (card($\bar{\mathcal{J}}$ )/s) s indices in $\bar{\mathcal{J}}$ .

In some examples, $\mathcal{J} = \bar{\mathcal{J}}_{[\mathrm{card}(\bar{\mathcal{J}})\,-\,((\mathrm{card}(\bar{\mathcal{J}})/s)\,s):\,]}$, which may mean that $\mathcal{J}$ may include the last (card($\bar{\mathcal{J}}$ )/$s$) $s$ indices in $\bar{\mathcal{J}}$

In some examples, $\mathcal{J}$ may be a (e.g., any) subset of $\bar{\mathcal{J}}$ with cardinality (card($\bar{\mathcal{J}}$ )/$s$) $s$.

In some examples, since s may be expressed as $s = 2^r$, in (1270) shown in FIG. 12A, (card($\bar{\mathcal{J}}$ ) » $r$) « $r$ may be written, e.g., instead of (card($\bar{\mathcal{J}}$ )/$s$) $s$.

In some examples, multiple (e.g., two) sparse matrices of weights belonging to multiple (e.g., two) consecutive layers may be fed into an algorithm eliminating rows/columns of weights. For example, for a hybrid block-based video codec (e.g., ECM-14.0) including a coding module that may use an NN with sparse weights, inside the NN, multiple (e.g., two) sparse matrices of weights belonging to multiple (e.g., two) consecutive layers may feature rows/columns filled (e.g., exclusively) with zeros (0s). As shown in FIG. 10, at (1002), the multiple (e.g., two) sparse matrices of weights may be (e.g., successively) fed into (1250), e.g., as shown in FIG. 12A. The first run of (1250) may be fed with the first sparse matrix of weights. A version of the second sparse matrix of weights with eliminated rows/columns of weights may be created, e.g., following the first run. The created version of the second sparse matrix of weights with eliminated rows/columns of weights may be fed into (1250) (e.g., instead of the original second sparse matrix of weights), for example, during the second run of (1250).

In some examples, NN$_{init}$ may be an NN cascading a first fully-connected layer with a (non-sparse) matrix of weights $U$ of size $k \times m$, without any bias, with LeakyReLU, a second fully-connected layer with sparse matrix of weights $V$ of size $m \times n$, without any bias, with LeakyReLU, a third fully-connected layer with sparse matrix of weights $W$ of size $n \times l$, without any bias, with LeakyReLU, and a fourth fully-connected layer with (non-sparse) matrix of weights $Z$ of size $l \times l'$, without any bias, without any non-linear function. Said differently, NN$_{init}$ may be expressed as, for a given input vector $x$ of size $k$, NN$_{init}(x)$ = LeakyReLU(LeakyReLU(LeakyReLU(xU)V)W)Z. Criterion C may state that a sparse matrix of weights $T$ may be added to $\mathcal{S}$ if, in NN$_{init}$, between the vector-matrix multiplication involving $T$ and the next vector-matrix multiplication, there exists no operation turning an input coefficient at zero (0) into $\alpha \neq 0$.

Continuing with the example, as shown in FIG. 10, at (1001), $\mathcal{S} = \{V, W\}$. At (1002), (1150 or 1250) may be run a first time with $V$ as input, which may yield $\{\dot{V}, \dot{W}\}$. Then, (1150 or 1250) may be run a second time with $W$ as input, which may yield $\{\ddot{W}, \dot{Z}\}$. Consequently, $\dot{\mathcal{S}} = \{\dot{V}, \ddot{W}, \dot{Z}\}$. At (1003), NN$_{end}$ may be identical to NN$_{init}$, except that, in NN$_{end}$, $\dot{V}$ may replace $V$, $\ddot{W}$ may replace $W$, and $\dot{Z}$ may replace $Z$.

In some examples, NN$_{init}$ may be an NN cascading a first fully-connected layer with a (non-sparse) matrix of weights $U$ of size $k \times m$, with vector of biases $b$ of size $m$, with PReLU, a second fully-connected layer with sparse matrix of weights $V$ of size $m \times n$, without any bias, with ReLU, a third fully-connected layer with sparse matrix of weights $W$ of size $n \times l$, without any bias, with ReLU, and a fourth fully-connected layer with (non-sparse) matrix of weights $Z$ of size $l \times l'$, with vector of biases $c$ of size $l'$, without any non-linear function. Said differently, NN$_{init}$ may be expressed as, for a given input vector $x$ of size $k$, NN$_{init}(x)$ = ReLU(ReLU(PReLU(xU + b)V)W)Z + c. Criterion C may state that a sparse matrix of weights $T$ may be added to $\mathcal{S}$ if, in NN$_{init}$, between the vector-matrix multiplication involving $T$ and the next vector-matrix multiplication, there exists no operation turning an input coefficient at zero (0) into $\alpha \neq 0$.

Continuing with the example, as shown in FIG. 10, at (1001), $\mathcal{S} = \{V, W\}$. At (1002), (1150 or 1250) may be run a first time with $V$ as input, which may yield $\{\dot{V}, \dot{W}\}$. Then, (1150 or 1250) may be run a second time with $W$ as input, which may yield $\{\ddot{W}, \dot{Z}\}$. Consequently, $\dot{\mathcal{S}} = \{\dot{V}, \ddot{W}, \dot{Z}\}$. At (1003), NN$_{end}$ may be identical to NN$_{init}$, except that, in NN$_{end}$, $\dot{V}$ may replace $V$, $\ddot{W}$ may replace $W$, and $\dot{Z}$ may replace $Z$.

Examples pertaining to weight matrices may be generalized to convolutions. Examples describe an NN with sparse weights, where the analysis (e.g., pre-analysis) of the weight matrices of the NN may remove rows/columns of weights in the weight matrices. The principle of the analysis (e.g., pre-analysis) of the weight matrices of the NN may be (e.g., straightforwardly) generalized to a set of sparse convolutional kernels. For example (e.g., in the generalization), the multiplication of a vector with a matrix of weights may become the convolution of a stack of feature maps with a set of convolutional kernels, and a column of weights may become a convolutional kernel, etc.

The timing of the application of the analysis (e.g., pre-analysis) may vary.

In some examples, the timing of the application of the analysis (e.g., pre-analysis) may be at the end of the offline training of an NN with sparse weights. For example, the pre-analysis of the weight matrices in an NN with sparse weights may occur at the end of the offline training of the NN. The analysis (e.g., pre-analysis) may happen, for example, before the encoding/decoding of a video sequence via a hybrid block-based video codec (e.g., ECM-14.0) with a coding module involving the NN with sparse weights.

In some examples, the timing of the application of the analysis (e.g., pre-analysis) may be during the conversion of the graph of an NN with sparse weights. For example, the analysis (e.g., pre-analysis) of the weight matrices in an NN with sparse weights may occur during the conversion of the graph of the NN into a graph whose format may be compatible with the hybrid block-based video codec of interest (e.g., ECM-14.0). For example, the pre-analysis of the weight matrices in the NN may happen during the conversion of the graph of the NN from the Tensorflow format to the SADL format. For (e.g., another) example, the pre-analysis of the weight matrices in the NN may happen during the conversion of the graph of the NN from the PyTorch format to the SADL format. For (e.g., another) example, the pre-analysis of the weight matrices in the NN may happen during the conversion of the graph of the NN from the ONNX format to the SADL format. The pre-analysis may happen, for example, before the encoding/decoding of a video sequence via a hybrid block-based video codec (e.g., ECM-14.0) with a coding module involving the NN with sparse weights.

In some examples, the timing of the application of the analysis (e.g., pre-analysis) may be during the loading of the graph of an NN with sparse weights at the beginning of the encoding/decoding of a given video sequence. For example, the pre-analysis of the weight matrices in an NN with sparse weights may occur at the beginning of the encoding/decoding of a video sequence via the hybrid block-based video codec of interest (e.g., ECM-14.0) featuring a coding module with the NN, e.g., during the loading of the graph of the NN.

In some examples, the timing of the application of the analysis (e.g., pre-analysis) may be during an update of the graph of the NN with sparse weights following an online update of its parameters. For example, the pre-analysis of the weight matrices in the NN with sparse weights may occur during the encoding/decoding of a given video sequence, e.g., during an update of the graph of the NN, such as following an online update of its parameters. Performance of the analysis (e.g., pre-analysis) during an update of the graph of the NN with sparse weights may apply, for example, to the content adaptive Low Operation Point (LOP) in-loop filtering version 3, called LOP-3, e.g., in the case where the NN for in-loop filtering may feature sparse convolutional kernels.

Removal of wasteful computations in neural networks with sparse weights may be used, for example, in any hybrid block-based video codec with at least one coding module including an NN with sparse weights.

Removal of wasteful computations in neural networks with sparse weights may be implemented, for example, by a method for generating an NN graph running inside a coding module of a hybrid block-based video codec.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video decoder device, the video decoder device comprises:
   a processor configured to:

   determine a first neural network (NN), wherein the first NN is associated with sparse weights and comprises an architecture and a set of parameters;
   determine a set of sparse matrices of weights inside the first NN that satisfies a criterion; and
   determine a modified set of matrices of weights by processing each sparse matrix of weights in the set of sparse matrices of weights, such that at least one of one or more non-zero rows or one or more non-zero columns from the corresponding sparse matrix of weights is transferred to a modified matrix of weights, wherein a second NN is created by reusing the architecture of the first NN and uses each modified matrix of weights belonging to the determined modified sets of matrices of weights instead of its associated matrix of weights in the first NN.

2. The video decoder device of claim 1, wherein the processor being configured to determine the set of sparse matrices of weights inside the first NN that satisfies the criterion, comprises the processor being configured to include a matrix in the set of sparse matrices of weights if, in the first NN, between a vector-matrix multiplication involving the matrix and a next vector-matrix multiplication, input coefficient values that are zero remain unchanged throughout the operations.

3. The video decoder device of claim 1, wherein the processor being configured to determine the set of sparse matrices of weights inside the first NN that satisfies the criterion, comprises the processor being configured to include a matrix in the set of sparse matrices of weights if, in the first NN, a cascade of operations between a vector-matrix multiplication involving the matrix and a next vector-matrix multiplication turns an input coefficient at 0 into 0.

4. The video decoder device of any one of claims 1 to 3, wherein the processor is further configured to decode a video sequence via a hybrid-block-based video codec using the modified set of matrices of weights.

5. The video decoder device of any one of claims 1 to 3, wherein the processor is further configured to determine the modified set of matrices of weights during a conversion of a graph of the first NN.

6. The video decoder device of any one of claims 1 to 3, wherein the processor is further configured to determine the modified set of matrices of weights during a load of a graph of the first NN at the beginning of decoding a video sequence.

7. The video decoder device of any one of claims 1 to 3, wherein the processor is further configured to determine the modified set of matrices of weights during an update of a graph of the first NN following an update of the parameters.

8. A video encoder device, the video encoder device comprises:
a processor configured to:

determine a first neural network (NN), wherein the first NN is associated with sparse weights and comprises an architecture and a set of parameters;
determine a set of matrices of weights inside the first NN that satisfies a criterion; and
determine a modified set of matrices of weights by processing each sparse matrix of weights in the set of sparse matrices of weights, such that at least one of one or more non-zero rows or one or more non-zero columns from the corresponding sparse matrix of weights is transferred to a modified matrix of weights, wherein a second NN is created by reusing the architecture of the first NN and using each modified matrix of weights belonging to the determined modified set of matrices of weights instead of its associated matrix of weights in the first NN.

9. The video encoder device of claim 8, wherein the processor being configured to determine the set of sparse matrices of weights inside the first NN that satisfies the criterion, comprises the processor being configured to include a matrix in the set of sparse matrices of weights if, in the first NN, between a vector-matrix multiplication involving the matrix and a next vector-matrix multiplication, input coefficient values that are zero remain unchanged throughout the operations.

10. The video encoder device of claim 8, wherein the processor being configured to determine the set of sparse matrices of weights inside the first NN that satisfies the criterion, comprises the processor being configured to include a matrix in the set of sparse matrices of weights if, in the first NN, a cascade of operations between a vector-matrix multiplication involving the matrix and a next vector-matrix multiplication turns an input coefficient at 0 into 0.

11. The video encoder device of any one of claims 8 to 10, wherein the processor is further configured to encode a video sequence via a hybrid-block-based video codec using the modified set of matrices of weights.

12. The video encoder device of any one of claims 8 to 10, wherein the processor is further configured to determine the modified set of matrices of weights during a conversion of a graph of the first NN.

13. The video encoder device of any one of claims 8 to 10, wherein the processor is further configured to determine the modified set of matrices of weights during a load of a graph of the first NN at the beginning of encoding a video sequence.

14. The video encoder device of any one of claims 8 to 10, wherein the processor is further configured to determine the modified set of matrices of weights during an update of a graph of the first NN following an update of the parameters.

**FIG. 1**

FIG. 2

**FIG. 3**

EP 4 733 999 A1

**FIG. 4**

EP 4 733 999 A1

$$w \times h \in T$$
$$\&\& \ x \geq n_l$$
$$\&\& \ y \geq n_a?$$

yes                    no

$\mathcal{S}_{\subset}$              $\mathcal{S}_{\subset}$

**0** (nnFlag = 0)

nnFlag ?

**1** (nnFlag = 1)

$\mathcal{S}$                    END

**FIG. 5**

FIG. 6

**FIG. 7**

FIG. 8

(900) beginning of the computations in two successive fully-connected layers, the first fully-connected layer involving a sparse matrix of weights

$p$

(901)

$m$

$n$

$V$

$m$ $p$

$q = pV$

(902) $q$

optionally, $\bar{q} = f(q)$

$\bar{q}$

$(C_0)$

# FIG. 9A

$(C_0)$ $\bar{q}$

(903)

$n$

$l$

$W$

$n$ $\bar{q}$

$t = \bar{q}W$

(904) $t$

optionally, $\bar{t} = g(t)$

$\bar{t}$

(905) end of the computations in two successive fully-connected layers, the first fully-connected layer involving a sparse matrix of weights

# FIG. 9B

```
(1000)    ┌─────────────────────────────────────────────────────────────────┐
          │ beginning of the pre-analysis applied to a NN NN_init with sparse weights │
          └─────────────────────────────────────────────────────────────────┘
                                        │
                                        ▼
(1001)    ┌─────────────────────────────────────────────────────────────────┐
          │ defining a set 𝒮 of sparse matrices of weights inside NN_init to be │
          │         considered by this pre-analysis via a criterion 𝒞          │
          └─────────────────────────────────────────────────────────────────┘
                                        │  𝒮
                                        ▼
(1002)    ┌─────────────────────────────────────────────────────────────────┐
          │ for each sparse matrix of weights 𝑉 in 𝒮, running (1150) with 𝑉 as input, │
          │           yielding the set 𝒮̇ of modified matrices of weights      │
          └─────────────────────────────────────────────────────────────────┘
                                        │  𝒮̇
                                        ▼
(1003)    ┌─────────────────────────────────────────────────────────────────┐
          │ defining the pre-analyzed NN NN_end as NN_init but, ∀i ∈ card(𝒮̇), 𝒮̇_i in │
          │       NN_end replacing its associated matrix of weights in NN_init │
          └─────────────────────────────────────────────────────────────────┘
                                        │  NN_end
                                        ▼
(1004)    ┌─────────────────────────────────────────────────────────────────┐
          │     end of the pre-analysis applied to NN_init with sparse weights │
          └─────────────────────────────────────────────────────────────────┘
```

(1000) beginning of the pre-analysis applied to a NN $NN_{init}$ with sparse weights

(1001) defining a set $\mathcal{S}$ of sparse matrices of weights inside $NN_{init}$ to be considered by this pre-analysis via a criterion $\mathcal{C}$

$\mathcal{S}$

(1002) for each sparse matrix of weights $V$ in $\mathcal{S}$, running (1150) with $V$ as input, yielding the set $\dot{\mathcal{S}}$ of modified matrices of weights

$\dot{\mathcal{S}}$

(1003) defining the pre-analyzed NN $NN_{end}$ as $NN_{init}$ but, $\forall i \in \mathrm{card}(\dot{\mathcal{S}})$, $\dot{\mathcal{S}}_i$ in $NN_{end}$ replacing its associated matrix of weights in $NN_{init}$

$NN_{end}$

(1004) end of the pre-analysis applied to $NN_{init}$ with sparse weights

# FIG. 10

(1150)

$V$ of size $m \times n$

(1170)

finding the set $\mathcal{I}$ of indices of columns of $V$ filled with 0s exclusively

$\mathcal{I}$

(1171)

allocating the matrix $\dot{V}$ of size $m \times \dot{n}$, $\dot{n} = n - \mathrm{card}(\mathcal{I})$, the coefficients in $\dot{V}$ being initialized in any manner

$\dot{V}$

(1172)

transferring the columns of $V$ that are not filled with 0s exclusively into $\dot{V}$ via the process below

initializing $i = 0$ and $j = 0$

true    while $i < n$    false

true    $i \in \mathcal{I}$?    false

setting the column of $\dot{V}$ of index $j$ to the column of $V$ of index $i$

$j \mathrel{+}= 1$

$i \mathrel{+}= 1$

$\dot{V}$

$(C_1)$

# FIG. 11A

$(C_1)$   $\dot{V}$

(1173) — allocating the matrix $\dot{W}$ of size $\dot{n} \times l$, the coefficients in $\dot{W}$ being initialized in any manner

$\mathcal{J}$     $\dot{W}$

(1174) — transferring the rows of $W$ that are not filled with 0s exclusively into $\dot{W}$ via the process below, $W$ denoting the matrix of weights of size $n \times l$ involved in the vector-matrix multiplication following the vector-matrix multiplication involving $V$

initializing $i = 0$ and $j = 0$

true    while $i < n$    false

true   $i \in \mathcal{J}$?   false

setting the row of $\dot{W}$ of index $j$ to the row of $W$ of index $i$

$j \mathrel{+}= 1$

$i \mathrel{+}= 1$

$\dot{W}$

$\{\dot{V}, \dot{W}\}$

# FIG. 11B

(1250)

$V$ of size $m \times n$

(1270)

finding the set $\bar{J}$ of indices of columns of $V$ filled with 0s exclusively; defining the subset $J$ of $\bar{J}$ containing $(\mathrm{card}(\bar{J})/s)$ $s$ indices in $\bar{J}$

$J$

(1271)

allocating the matrix $\dot{V}$ of size $m \times \dot{n}$, $\dot{n} = n - \mathrm{card}(J)$, the coefficients in $\dot{V}$ being initialized in any manner

$\dot{V}$

(1272)

transferring the columns of $V$ that are not filled with 0s exclusively into $\dot{V}$ via the process below

initializing $i = 0$ and $j = 0$

true    while $i < n$    false

true    $i \in J$?    false

setting the column of $\dot{V}$ of index $j$ to the column of $V$ of index $i$

$j \mathrel{+}= 1$

$i \mathrel{+}= 1$

$\dot{V}$

$(C_1)$

# FIG. 12A

$(C_1)$  $\dot{V}$

(1273) allocating the matrix $\dot{W}$ of size $\dot{n} \times l$, the coefficients in $\dot{W}$ being initialized in any manner

$\dot{W}$

$\mathcal{I}$

(1274) transferring the rows of $W$ that are not filled with 0s exclusively into $\dot{W}$ via the process below, $W$ denoting the matrix of weights of size $n \times l$ involved in the vector-matrix multiplication following the vector-matrix multiplication involving $V$

initializing $i = 0$ and $j = 0$

true   while $i < n$   false

true   $i \in \mathcal{I}$?   false

setting the row of $\dot{W}$ of index $j$ to the row of $W$ of index $i$

$j \mathrel{+}= 1$

$i \mathrel{+}= 1$

$\dot{W}$

$\{\dot{V}, \dot{W}\}$

# FIG. 12B

Europäisches Patentamt

European Patent Office

Office européen des brevets

# EUROPEAN SEARCH REPORT

**Application Number**

EP 24 30 6779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAYLISS WOODY ET AL: "Complexity Reduction of Learned In-Loop Filtering in Video Coding", 2022 IEEE INTERNATIONAL SYMPOSIUM ON CIRCUITS AND SYSTEMS (ISCAS), IEEE, 27 May 2022 (2022-05-27), pages 506-510, XP034224596, DOI: 10.1109/ISCAS48785.2022.9937777 [retrieved on 2022-11-11] * abstract * * section I, paragraph 3 * * algorithm 1 * * section III-A, lines 2-4 * * section III-C * * section III-D, lines 1-4 * ----- | 1-14 | INV. G06N3/0495 G06N3/048 H04N19/426 |
| A | YUE LI ET AL: "Designs and Implementations in Neural Network-based Video Coding", ARXIV.ORG, CORNELL UNIVERSITY LIBRARY, 201 OLIN LIBRARY CORNELL UNIVERSITY ITHACA, NY 14853, 11 September 2023 (2023-09-11), XP091611165, * the whole document * ----- | 1-14 | |
| A | YU JIECAO ET AL: "Scalpel: Customizing DNN pruning to the underlying hardware parallelism", 2017 ACM/IEEE 44TH ANNUAL INTERNATIONAL SYMPOSIUM ON COMPUTER ARCHITECTURE (ISCA), ACM, 24 June 2017 (2017-06-24), pages 548-560, XP033268546, DOI: 10.1145/3079856.3080215 [retrieved on 2017-12-12] * the whole document * ----- | 1-14 | |

**TECHNICAL FIELDS SEARCHED (IPC)**

G06N
H04N

The present search report has been drawn up for all claims

| Place of search | Date of completion of the search | Examiner |
|---|---|---|
| The Hague | 15 March 2025 | Aoun, Marc |

EPO FORM 1503 03.82 (P04C01)